# EUROPEAN PATENT APPLICATION

(11) **EP 3 093 207 A1**
(43) Date of publication of application: **16.11.2016**
(21) Application number: 15001452.0
(22) Date of filing: 13.05.2015
(51) Int. Cl.: B60T 17/08

(54) **COMPACT SPRING BRAKE ACTUATOR**

(71) Applicant: WABCO Europe BVBA, 1170 Brussels (BE)
(72) Inventor: Lesko, Piotr, 46-203 Kluczbork (PL); Szczuplak, Lukasz, 55-095 Dlugoleka (PL); Szozda, Andrzej, 58-200 Dzierzoniow (PL); Szuberski, Oktawian, 54-129 Wroclaw (PL)
(74) Representative: Copi, Joachim

(57) **Abstract**

The invention relates to a brake actuator (1) for a vehicle, in particular for a commercial vehicle. In particular, the brake actuator comprises a housing (17), said housing (17) having a sidewall (18), a spring brake piston (11) which is movably, in particular slidably arranged inside the housing (17), and sealing means (29) for sealing off a cavity (8) between the spring brake piston (11) and the housing (17) and guide means (31) for axially guiding the movement of the spring brake piston (11), wherein the sealing means (29) and guide means (31) are formed as separate parts and/or the sealing means (29) is more flexible than the guide means (31), in particular in a radial direction.

## Description

The invention relates to a brake actuator for a vehicle, and in particular for a commercial vehicle, comprising a housing, said housing having a side wall, a spring brake piston which is movably, in particular slidably, arranged inside the housing, sealing means for sealing off a cavity between the spring brake piston and the housing and guide means for axially guiding the movement of the spring brake piston.

Brake actuators of the aforementioned type are also referred to spring brake actuators and are widely used in the industry for providing the brake force to commercial vehicles like trucks, buses etc.. With fuel economy becoming increasingly important also in the field of use for the aforementioned vehicles, research and development efforts lean towards searching for more lightweight and space-saving design in order to meet the tightening requirements. As brake actuators of the initially mentioned type require a certain amount of space on the vehicle they are installed to in particular in the direction of the stroke of the brake piston, it is an ongoing endeavor to provide satisfying brake functionality while at the same time reducing the stroke-length and thus space consumption in the stroke direction of the brake actuator.

DE 143 05 46 and DE 120 31 41 discuss brake actuators which comprise sealing and guide means which are integrated in one part in an attempt to arrive at a compact build.

However, the solution suggested in the aforementioned publications leaves room for improvement.

Accordingly, it has been an object of the invention to suggest a brake actuator of the initially mentioned type which enables a reduction in space demand while at the same time providing satisfactory brake functionality.

The invention solves the object with a brake actuator according to claim 1. In particular, the brake actuator is defined according to a first aspect such that the sealing means and guide means are formed as separate parts. In a second aspect, which is at the same time to be seen in combination with the first aspect and alternatively as a separate aspect of the invention, the sealing means is more flexible than the guide means, in particular in a radial direction.

Accordingly, the invention suggests a first embodiment where the sealing means and the guide means are formed as separate parts. Furthermore, the invention encompasses an embodiment wherein the sealing means and guide means are not formed as separate parts, but as one combined part wherein the sealing means is more flexible than the guide means, in particular in a radial direction. Furthermore, the invention encompasses an embodiment wherein the sealing means and the guide means are formed as separate parts, and wherein the sealing means is more flexible than the guide means, in particular in a radial direction.

The invention makes use of the understanding that a separation of functionality of the sealing and guide means leads to a shorter required stroke length of the spring brake piston. This is surprising at first when considering that by the measure of separating the sealing means from the guide means, the complexity of the brake actuator is increased since a higher number of parts need to be integrated. Furthermore, in the addition or alternative which features the sealing means to be more flexible than the guide means, in particular in the radial direction, the part complexity of the sealing means and guide means is increased.

If the sealing means is more flexible than the guide means, this is understood to mean that the sealing means can yield more easily, i.e. is more easily deformable by external force acting upon it than the guide means, in particular in a radial direction. This flexibility is preferably achieved by forming the two from material(s) with distinct physical material characteristics, for example, by forming the sealing means from a softer material than the guide means. This might be a comparatively soft polymer. At the same time, the guide means might exemplarily be formed from a comparatively hard polymer. Alternatively, the guide means could be formed from a metal or metal alloy whereas the sealing means could be formed from an established polymer which is used conventionally for sealing means.

Alternatively or additionally to a change in physical material characteristics, it is considered to be beneficial in a preferred embodiment to create a difference in flexibility between the sealing means and the guide means by providing distinct geometrical structures for the two. For example, by deliberately weakening the structure at certain points, exemplarily with recesses forming a honeycomb or similar structure, an increased flexibility in particular in certain predefined directions can be achieved.

The more flexible the lip seal is, the easier it becomes to compensate for radial tolerances or tilting movements of the piston with respect to the housing. This is particularly effective when the lip seal is formed as a separate part from the guide means.

However, by separating the functionality of the sealing means and of the guide means from one another, it is made possible to identify an ideal layout for the guide means to fulfill exclusively the function of guiding the brake piston. At the same time, it becomes possible to identify an ideal layout for the sealing means to perform exclusively the sealing function of the brake piston against the housing, without need of a compromise between the two. Accordingly, the functionality in terms of guiding and in terms of sealing is increased to an extent which compensates easily the added complexity of the brake actuator.

The invention is developed further in a preferred embodiment wherein the sealing means and the guide means are spaced apart from one another. Preferably, the sealing means and the guide means are radially spaced apart from another. According to a further preferred embodiment, the sealing means and the guide means additionally or alternatively are axially space apart from another. The axial and/or radial spacing of the sealing means and the guide means translates into the guide means to be placed in a region of the brake actuator where they do not have to seal but instead can act efficiently as a guide means for the piston.

In a preferred embodiment, the sealing means are sealingly arranged between the spring brake piston and the housing. Preferably, the sealing means engage a peripheral surface of the spring brake piston such as a peripheral surface of a flange on the one hand side and a preferably cylindrical, wall section of the cylinder housing on the other side.

Preferentially, the sealing means are held in a recess provided in a flange portion of the spring brake piston. The recess ensures that the sealing means are not inadvertently displaced or sheared away from their regular seat in the flange portion of the spring brake piston.

In a particularly preferred embodiment, the sealing means are formed as a lip seal ring. The lip seal ring preferentially comprises a first lip extending in a first radial direction, such as radially outwards, and preferably a second lip extending in a second radial direction, preferably radially inwards, away from the firs direction. The lips will be bent towards one another between the housing and the spring brake piston, thus exerting flexibly a sealing force.

In a further preferred embodiment, the guide means are arranged to contact and guide any axial relative movement between the spring brake piston and a guide wall. Said guide wall preferably is radially spaced apart from the cylinder housing sidewall, preferably arranged radially inwards of the part of the housing sealingly engaged by the sealing means. The guide wall may in a first preferred alternative be formed or attached to the cylinder housing base of the brake actuator and extend away therefrom. In a second alternative, the guide wall is attached to or formed on and extending from a spring seat which receives the compression spring of the spring brake actuator. Preferably, the guide wall and valve seat are formed as one integral deep-drawn metal part.

According to a further preferred embodiment, the guide means are formed as a guide ring. The guide ring preferably comprises a slit opening.

While beneficial operation of the brake actuator according to the invention may be achieved as mentioned hereinabove by modifying the geometrical structure of the guide means and sealing means relative to one another, it is in preferred embodiment suggested that the sealing means and the guide means are made of different materials, wherein the material of the sealing means preferably is selected from the list consisting of: synthetic caoutchouc, for example nitrile-butadiene-rubber (NBR), silicone caoutchouc, for example vinyl-methyl-silicone (VMQ), fluorocarbon rubber (FKM), polyurethane (PU), or hydrated nitrile rubber (HNBR).

The material of the guide means preferably is selected from the list consisting of: polyamide (PA), polyoxymethylene (POM), thermoplastic polyester, for example polybutylene therephthalate (PBT), or polyphenylene sulfide (PPS).

For a more complete understanding of the invention, the invention will now be described in more detail with reference to the accompanying drawings. The detailed description will illustrate and described or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and than what is claimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:
Fig. 1 a spring brake actuator according to a preferred embodiment,
Fig. 2 the spring-loaded portion of the spring brake actuator of Fig. 1,
Figs. 3a,b schematic cross sectional and side views of a sealing means of the preferred embodiment, and
Figs. 4a,b,c cross sectional and schematic side views of a guide means of the preferred embodiment.

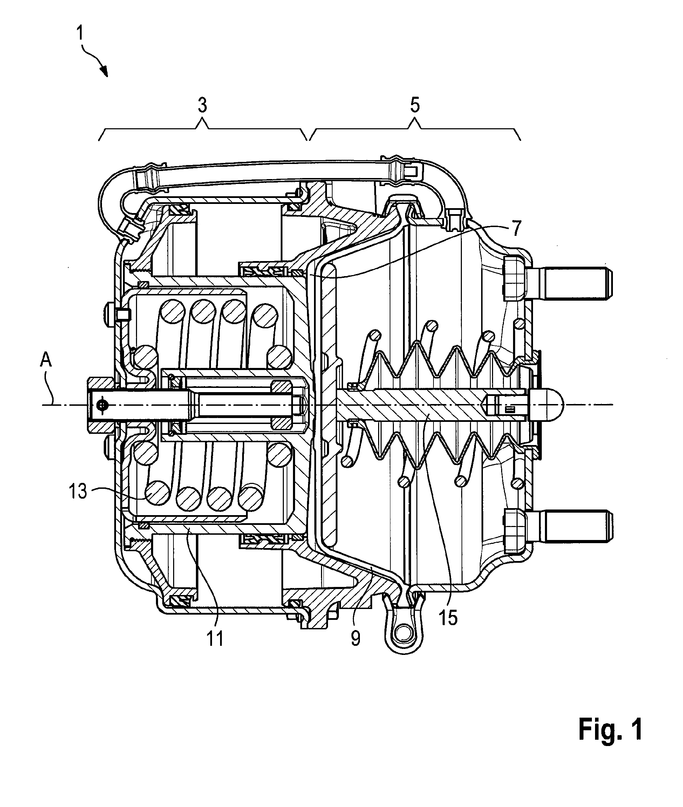

Fig. 1 depicts a spring brake actuator 1 in accordance with a preferred embodiment of the invention. The spring brake actuator 1 comprises a spring-loaded portion 3 and a service brake portion 5. A pressure chamber 7 can be supplied with pressurized fluid, in particular gas, to push a diaphragm 9 against a push rod 15 which ultimately leaves to an operation of the brake mechanism. Alternatively, the spring brake actuator 1 comprises in the spring-loaded portion 3 a compression spring 13 which is adapted to cause a spring brake piston 11 to move axially along axis A towards the diaphragm 9 and push rod 15 to supply for example the parking brake function or emergency brake function. The spring brake piston 11 radially encompasses the compression spring 13, which lies completely inside the spring brake piston 11 in the compressed state shown in figure 1.

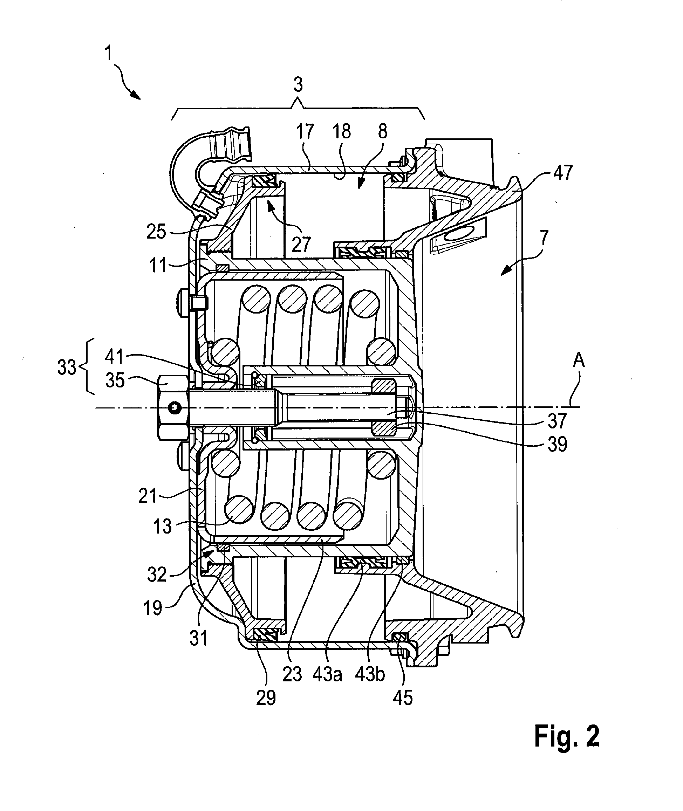

Details of key features of the invention are explained in more detail with reference to figures 2 - 4.

Fig. 2 shows the spring-loaded portion 3 of the spring brake actuator 1. The spring brake actuator 1 comprises a cylinder housing 17 having a sidewall 18 and a cylinder housing base 19. Attached to the cylinder housing base 19 is a spring seat 21 which presently is the form of a deep drawn component. The spring seat 21 holds the compression spring 13 and comprises a guide wall 23 extending axially away from the cylinder housing base 19. Radially outwards of the guide wall 23, the spring brake actuator 1 comprises the spring brake piston 11 which is arranged coaxially around the guide wall 23. When released, the compression spring 13 is still covered, this time in part by the spring brake piston 11 and a guide wall 23 of the spring seat 21. The spring brake piston 11 comprises a flanged portion 25 which is fastened, preferably by means of screws, to the spring brake piston 11. Along the periphery of flange 25, the spring brake piston 11 comprises a recess 27. The recess 27 holds a sealing means 29 is in sealing engagement with the sidewall 18.

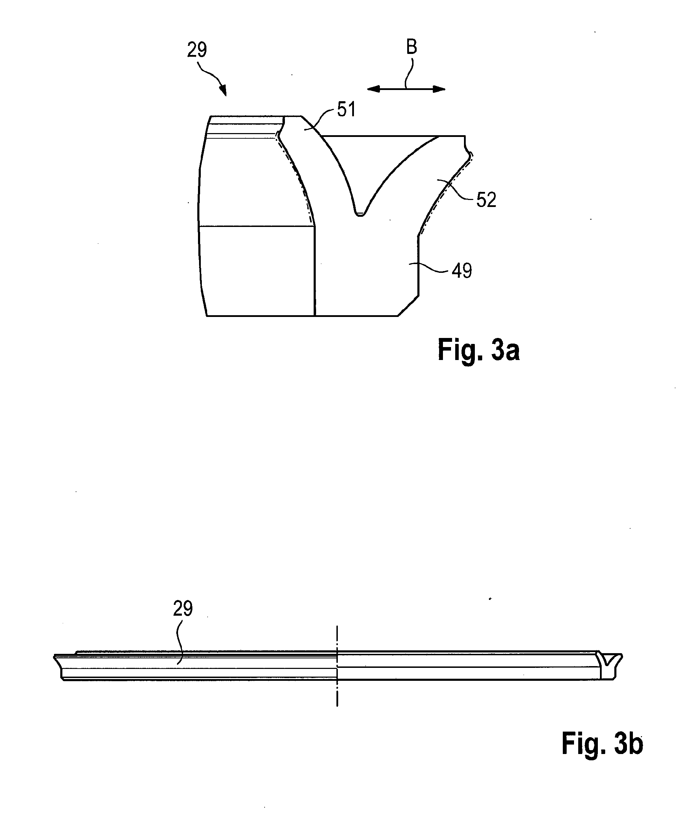

The sealing means 29 is in the form of a lip seal (cf. Figs. 3a,b). Radially and axially spaced apart from the sealing means 29, the spring brake actuator 1 comprises a guide means 31 which is formed as a guide ring.

The spring brake piston 11 comprises a recess 32 holding the guide means 31.

In the rotational center of the spring brake actuator 1, the latter further comprises a release mechanism 33 having a static nut 35, a release bolt 37, a running nut 39 and sealing means 41.

To seal of the pressure chamber 7 against a cavity 8 holding the spring brake piston 11, a number of further sealing elements 43a,b are arranged in the spring-loaded portion 3. Due to the stabilizing effect achieved with the guide means 31, tilting of the spring brake piston 11 is limited and the sealing performance of the sealing elements 43a,b is improved.

Further sealing elements 45 seal the cylinder housing 17 against a flange cover 47.

The guide means 31 is adapted to guide the spring brake piston 11 during its movement along axis A which is in the piston stroke direction. The guide means 31 preferably is rigid enough to prevent or at least limit tilting movements of the spring brake piston. Any tilting movements or radial play are compensated for by the separately arranged sealing means 29 which is made of a comparatively more flexible material and/or has a structure which makes it more flexible such that despite any radial movement of the spring brake piston 11 or any tilting movement which is allowed for by the guide means 31, the sealing means 29 still sealingly abuts against the contact surface of the cylinder housing 17 and the flange portion 25 of the spring brake piston 11.

Fig. 3a,b show the sealing means 29 in more detail. The sealing means 29 comprises a base body 49. Formed on the base body 49 is a first sealing lip 51 extending in a first direction, namely radially inwards. Furthermore, a second sealing lip 52 extending in the opposite direction, namely radially outwards is formed on the base body 49. Both the first and second lip 51, 52 have an arcuate shape loading away from each other. The first sealing lip 51 is longer compared to the second sealing lip 52, and has a weaker wall thickness and curvature as compared to the second sealing lip 52. In comparison, the second sealing lip 52 is shorter, thicker and has a stronger curvature than the first sealing lip 51. These differences in geometrical structure, i.e. shape have the effect that the first sealing lip 51, while still being resilient, lies flush against the recess 27 provided in the spring brake piston 11 more easily than the second sealing lip 52 would lie flush against the first sealing lip 51 when be formed by contact with the wall of the cylinder housing 17. The flexibility in the radial direction (indicated by arrow B in Fig. 3a) is thus manipulated by the shape of the sealing lips 51, 52.

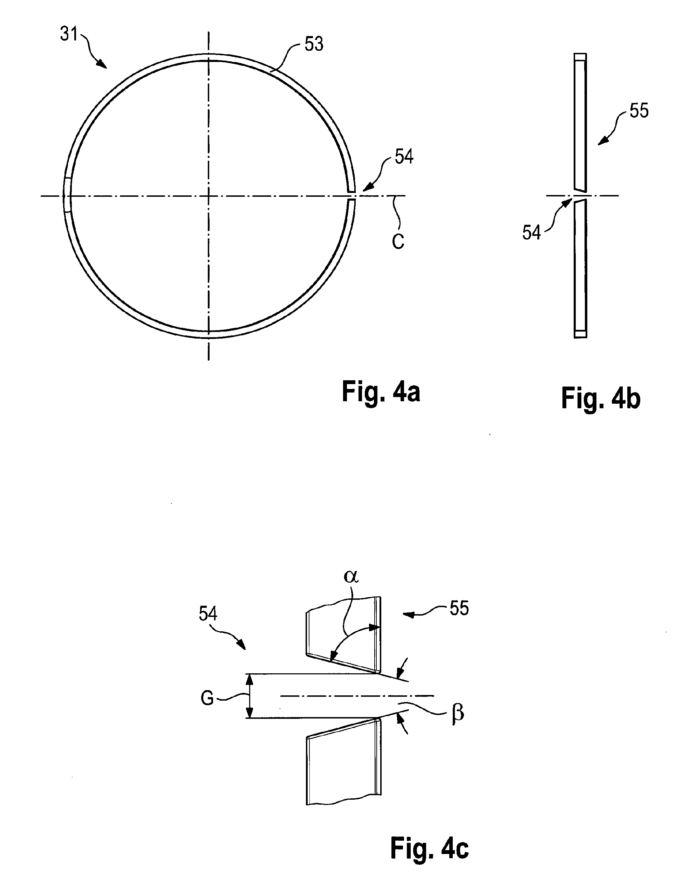

Fig. 4a-c show the guide means 31 in more detail. The guide means 31 comprises an annular base body 53 which has a slit-shaped opening 54, as can best be seen in Figs. 4b,c. The slit-shaped opening 54 has itself, when seen from beside in a plane perpendicular to a radial axis C an opening angle β which is caused by two oppositely arranged slanted edges which themselves have an angle α with respect to an axial face side 55 of the guide means 31.

The guide means 31 is shown in Fig. 4a in a compressed state, meaning in a state when it is already mounted in the spring brake piston 11. The recess is indicated by reference sign 32 in Fig. 2. When in the shown state of Fig. 4a, the slit-shaped opening 54 has a clearance G. When in the uncompressed state (which is not shown) clearance G would be larger. By having to compress the guide means 31 by narrowing the slit-shaped opening 54 during insertion of the guide means 31 into the recess 32, the guide means 31 snaps into place automatically as soon as it is introduced sufficiently far into the mounting position. It also provides a snug and reliable fit inside recess 32 to properly exert the guide function.

### List of reference signs (part of the description)

- 1: spring brake actuator
- 3: spring-loaded portion
- 5: service brake portion
- 7: pressure chamber
- 8: cavity
- 9: diaphragm
- 11: spring brake piston
- 13: compression spring
- 15: push rod
- 17: cylinder housing
- 18: sidewall
- 19: cylinder housing base
- 21: spring seat
- 23: guide wall
- 25: flange portion
- 27: recess
- 29: sealing means
- 31: guide means
- 32: recess
- 33: release mechanism
- 35: static nut
- 37: release bolt
- 39: running nut
- 41: sealing means (of release mechanism 33)
- 43a,b: sealing elements (of pressure chamber 7)
- 45: sealing element (of flange cover)
- 47: flange cover
- 49: base body (of sealing means 29)
- 51: first sealing lip
- 52: second sealing lip
- 53: annular base body (of guide means 31)
- 54: slit-shaped opening
- 55: axial face side (of guide means 31)

## Claims

1. Spring brake actuator (1) for a vehicle, in particular for a commercial vehicle,
comprising:
- a cylinder housing (17), said housing (17) having a sidewall (18),
- a spring brake piston (11) which is movably, in particular slidably arranged inside the cylinder housing (17), and
- sealing means (29) for sealing off a cavity (8) between the spring brake piston (11) and the cylinder housing (17) and guide means (31) for axially guiding the movement of the spring brake piston (11),
**characterized in that** the sealing means (29) and guide means (31) are formed as separate parts and/or **in that** the sealing means (29) is more flexible than the guide means (31), in particular in a radial direction.

2. Spring brake actuator (1) of claim 1,
wherein the sealing means (29) and the guide means (31) are spaced apart from one another.

3. Spring brake actuator (1) of claim 2, wherein the sealing means (29) and the guide means (31) are radially spaced apart from another.

4. Spring brake actuator (1) according to claim 2 or 3,
wherein the sealing means (29) and the guide means (31) are axially spaced apart from another.

5. Spring brake actuator (1) of any one of the preceding claims,
wherein the sealing means (29) are sealingly arranged between the spring brake piston (11) and the cylinder housing (17).

6. Spring brake actuator (1) of any one of the preceding claims,
wherein the sealing means (29) are held in a recess (27) provided in a flange portion (25) of the spring brake piston (11).

7. Spring brake actuator (1) of any one of the receding claims,
wherein the sealing means (29) are formed as a lip seal ring.

8. Spring brake actuator (1) of claim 7,
wherein the sealing means (29) comprises a first lip (51) extending in a first radial direction, and preferably a second lip (52) extending in a second radial direction, away from the first direction.

9. Spring brake actuator (1) of any one of the preceding claims,
wherein the guide means (31) are arranged to contact and guide any axial relative movement between the spring brake piston (11) and a guide wall (23).

10. Spring brake actuator (1) of claim 9,
said guide wall (23) being radially spaced apart from the cylinder housing sidewall (18).

11. Spring brake actuator (1) of claim 9 or 10,
wherein the guide wall (23) extends axially in a piston stroke direction (A), preferably from the spring seat (21) or a cylinder housing base (19).

12. Spring brake actuator (1) of any one of the preceding claims,
wherein the guide means (31) are formed as a guide ring.

13. Spring brake actuator (1) of claim 12,
wherein the guide ring comprises a slit-shaped opening (54).

14. Spring brake actuator (1) of any one of the preceding claims,
wherein the sealing means (29) and the guide means (31) are made of different materials, wherein the material of the sealing means preferably is selected from the list consisting of: synthetic caoutchouc, for example nitrile-butadiene-rubber (NBR), silicone caoutchouc, for example vinyl-methyl-silicone (VMQ), fluorocarbon rubber (FKM), polyurethane (PU), or hydrated nitrile rubber (HNBR) and wherein the material of the guide means preferably is selected from the list consisting of: polyamide (PA), polyoxymethylene (POM), thermoplastic polyester, for example polybutylene therephthalate (PBT), or polyphenylene sulfide (PPS).
